# EUROPÄISCHE PATENTSCHRIFT

(11) **EP 0 764 833 B1**
(45) Veröffentlichungstag und Bekanntmachung des Hinweises auf die Patenterteilung: **24.10.2001**
(21) Anmeldenummer: 96110860.2
(22) Anmeldetag: 05.07.1996
(51) Int. Cl.: G01F 1/20, G01F 1/34, G01P 5/14, F02B 31/00

(54) **Drall-Messverfahren für Rohrströmungen, insbesondere für einen simulierten Verbrennungsraum eines Kolbenmotors**
Tumble measurement for flow in tubes, in particular for a simulated combustion chamber of a piston engine
Mesure du tourbillonnement d'écoulements dans des conduits, en particulier pour une chambre de combustion simulée d'un moteur à piston

(30) Priorität: 23.09.1995 DE 19535486
(43) Veröffentlichungstag der Anmeldung: 26.03.1997
(73) Patentinhaber: Bayerische Motoren Werke Aktiengesellschaft, 80788 München (DE)
(72) Erfinder: Brüner, Thomas, 82194 Gröbenzell (DE); Hofmann, Thilo, 80809 München (DE); Fischer, Hubert, 82256 Fürstenfeldbruck (DE)

(56) Entgegenhaltungen:
- FR-A- 704 894
- SAE TECHNICAL PAPER SERIES 910477; SAE INTERNATIONAL CONGRESS AND EXPOSITION, 25.Februar 1991 - 1.März 1991, DETROIT,MI,US, Seiten 1-11, XP002022941 S.OMORI ET AL.: "Effect of Intake Port Flow Pattern on the In-cylinder Air Flow in Multi-valve SI Engines"

## Beschreibung

Die Erfindung betrifft ein Verfahren nach Patentanspruch 1 sowie eine Vorrichtung gemäß Anspruch 3.

Zur Ermittlung der Intensität einer Drall-Strömung in einem Rohr oder in einem Zylinder eines Kolbenmotors ist es bekannt, Flügelrad- bzw. Rotor-Anemometer einzusetzen mit einem mit der Rotationsfrequenz bzw. Winkelgeschwindigkeit des Dralls rotierendem Flügelrad, dessen Drehzahl bzw. Winkelgeschwindigkeit ein Maß für die Drallstärke bzw. Drallintensität ist.

Mit einem Flügelrad- oder einem Rotor-Anemometer kann sowohl ein um die Rohr-bzw. Zylinderachse drehender Drall als auch ein quer zur Rohr- bzw. Zylinderachse rotierender Drall, allgemein als Tumble bekannt, gemessen werden. Ein Meßverfahren sowie eine Meßvorrichtung hierfür sind auf den Seiten 593 und 594 im Heft 10 der DE-"MTZ Motortechnische Zeitschrift 55/1994" beschrieben und gezeigt.

Zur Erzielung verläßlicher Messungen muß bei rotierenden Flügelrädern und Rotoren die Trägheit der Flügel und damit ihre Masse minimiert werden, um möglichst rückkopplungsfrei messen zu können. Dies gilt auch für die Reibung in den Lagern der Flügelräder bzw. Rotoren, wobei die Reibung auch jenseits von mehr als 100 Umdrehungen pro Sekunde nur minimal sein darf. Dies erfordert aufwendige Lagerungen in Verbindung mit teurer Feinwerktechnik.

Trotz dieses nachteilig hohen mechanischen Aufwandes verbleibt eine nachteilige Rückwirkung dieser Anemometer auf die jeweilige Drallströmung.

Weiter ist aus der gattungsbildenden DE-C 26 13 275 eine Drall-Meßeinrichtung zur Untersuchung der Drallströmung in simulierten Verbrennungsräumen von Kolbenmotoren bekannt, bei der zur Ermittlung der Intensität eines in einer als simulierter Verbrennungsraum dienenden zylindrischen Kammer mittels eines drallerzeugenden Einlaßes erzeugten Dralls einer seiner durch eine Meßeinrichtung erfaßbaren Parameter dient. Als Parameter dient hierbei das vom Drall auf eine Strömungsgleichrichter-Platte ausgeübte Drehmoment, das über einen Dehnmeßstreifen an einem die Platte tragenden Torsionsstab ermittelt wird. Hiermit ist anstelle einer rotierenden Meßeinrichtung eine drehwinkelelastisch nachgiebige Meßeinrichtung vorgesehen.

Der Erfindung liegt die Aufgabe zugrunde, ein auf der Messung der Winkelgeschwindigkeit des Dralls basierendes Meßverfahren dahingehend zu verbessern, daß eine rotierende oder eine werkstoffelastisch nachgiebige Meßeinrichtung vermieden ist.

Diese Aufgabe ist mit dem Patentanspruch 1 gelöst, und zwar dadurch, daß ein in der Kammer koaxial zur Kammerachse oder um eine dazu quergerichtete Achse induzierter Drall einer an die Kammer entsprechend der jeweiligen Drallachse angeschlossenen Rohr- bzw. Meßstrecke mit zugeordneter Meßeinrichtung mittels der Rohrströmung zugeführt wird, wobei in der gegenüber dem Durchmesser "D" der Kammer einer etwa um das 2-/3,5fache kleineren Durchmesser "d" aufweisenden Rohr- bzw. Meßstrecke eine jeweilige Drall-Winkelgeschwindigkeit (ω) aus einer fliehkraftbedingten Druckdifferenz (Δ p) aus in einer Rohrquerebene radial beabstandet angeordneten Meßstellen im Drall gemessenen Radialkomponenten der Drücke unter Einbeziehung von Dichte und Temperatur ermittelt wird.

Durch die erfindungsgemäße vorrichtungsbedingte Anwendung des bekannten Drallerhaltungssatzes zur Ausbildung eines Dralls in der Rohr- bzw. Meßstrecke mit gesteigerter Drehgeschwindigkeit nutzt die Erfindung die physikalischen Eigenheiten des Dralls mit den auf die Masse des Strömungsmediums im rotierenden Drall wirkenden, mit zunehmenden Drallradius und gesteigerter Drehgeschwindigkeit anwachsenden Zentrifugalkräften in vorteilhafter Weise zur Messung statischer Druckdifferenzen in radialer Richtung im jeweiligen Drall. Die Maßzahl der Druckdifferenz ist somit erfindungsgemäß ein Maß für die Winkelgeschwindigkeit des Dralls und somit seiner Intensität.

Demgegenüber dient eine aus der DE-A 42 06 845 bekannte radiale Anordnung von Meßpunkten in einer Wirbelströmung der Messung einer Druckdifferenz, um daraus gemäß dem beanspruchten Verfahren zum Ermitteln des Anteils einer Gaskomponente in einem Gasgemisch den jeweiligen Partialdruck einer Gaskomponente zu erschließen. Diesem Dokument ist weder eine Anregung noch ein Hinweis darauf zu entnehmen, diese Differenzdruckmessung zur erfindungsgemäßen Ermittlung der Intensität eines Dralles über seine Winkelgeschwindigkeit zu verwenden, wobei anstelle der Ermittlung der Intensität des jeweiligen originalen Dralls in der Kammer erfindungsgemäß eine Intensitätsermittlung tritt an einem nach dem Drallerhaltungssatz in einer an die Drall-Kammer angeschlossenen Rohr- bzw. Meßstrecke von kleinerem Durchmesser erzielten Simultan-Drall von gesteigerter Drehgeschwindigkeit bzw. Rotationsfrequenz mit dadurch erhöhten Drücken und einer daraus vorteilhaft stabilisierten Druckdifferenz zur Ableitung einer für die jeweilige Drall-Intensität stehende Drall-Winkelgeschwindigkeit.

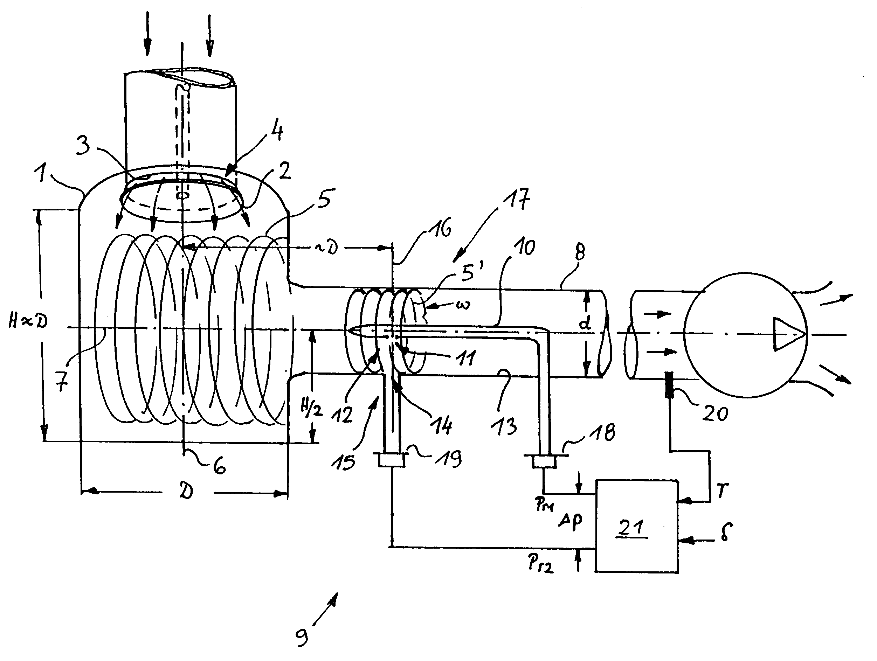

Auch die aus der DE-A 24 17 769 bekannte, an einem Ende einer Ansaugsammelleitung zur Ausbildung eines Steuersignals für eine elektronisch gesteuerte Kraftstoffeinspritzanlage vorgesehene Wirbelpfeife mit im Durchmesser großer Wirbelkammer und einem demgegenüber im Durchmesser kleinem Abströmstutzen führt in einer durch keine der Druckschriften angeregten Kombination mit der vorbeschriebenen Anordnung von Meßstellen in einer Wirbelströmung gemäß der DE-A 42 06 845 nicht zu dem erfindungsgemäßen Drall-Meßverfahren. Dies deshalb, weil einerseits für den Abströmstutzen der Wirbelpfeife als Funktion lediglich die Erzeugung akustischer Signale offenbart ist, und andererseits eine in Figur 2 der o.g. DE-A 42 06 845 offenbarte Anordnung der Meßpunkte den Fachmann dazu anregt, diese an der geschlossenen Stirnwand der vorbeschriebenen Wirbelpfeife vorzusehen.

Eine für eine einwandfreie Messung vorteilhaft maximale statische Druckdifferenz ist gemäß Anspruch 2 dadurch erreicht, daß die Radialdrücke einerseits im Drall-Zentrum und anderseits an einem durch eine Rohrwandung bestimmten Drall-Außenradius gemessen werden.

Mit der Erfindung ergibt sich, insbesondere durch die Verfahrensgestaltung nach Anspruch 2, eine im Aufbau einfache, weder rotierende noch drehwinkelelastisch nachgiebige Einrichtungen aufweisende Vorrichtung gemäß den weiteren Ansprüchen 3 bis 6 zur Durchführung des Drall-Meßverfahrens.

In erfinderischer Ausgestaltung der Vorrichtung zur Drall-Messung nach Anspruch 3 ist ein besonders einfacher Aufbau dadurch erzielt, daß in der Rohr- bzw. Meßstrecke koaxial ein stirnseitig verschlossenes Meßrohr vorgesehen ist mit einer radial gerichteten Durchbrechung in der Meßrohrwand als radial innerer Meßstelle im Drall-Zentrum, der in der Rohrwandung der Rohr- bzw. Meßstrecke eine radial gerichtete Durchbrechung als radial äußere Meßstelle im Drall-Außenradius zugeordnet ist.

Die ein Meßverfahren und eine Meßvorrichtung umfassende Erfindung ist besonders vorteilhaft anzuwenden bei Tumble-Strömungen, wobei nach Anspruch 4 die Rohr- bzw. Meßstrecke an einer Kammer mit induzierter Tumble-Strömung im wesentlichen auf halber Kammerhöhe quergerichtet angeschlossen angeordnet ist, wobei die Höhe "H" der Kammer maßlich etwa dem Durchmesser "D" der Kammer gewählt ist. Mit dieser Ausgestaltung ist eine nach dem Drallerhaltungssatz mögliche Tumble-Abwanderung in die Rohr- bzw. Meßstrecke aufgrund nicht vorhandener störender Meßeinrichtungen in vorteilhafter Weise ohne Störung des Tumbles erzielt und damit die Winkelgeschwindigkeit des homogenen Tumbles sehr genau ermittelbar.

Weiter beschreibt der Anspruch 5 ein in bezug auf den Anschluß der Rohr- bzw. Meßstrecke an die Tumble-Kammer vorteilhaft beabstandet vorgesehene Meßebene zur radialen Differenzdruckmessung in der Rohr- bzw. Meßstrecke.

Im Anspruch 6 ist schließlich eine mit einem Rechenwerk verknüpfte Meßvorrichtung zur direkten Anzeige der über die radiale Druckdifferenz in einem Drall- oder Tumble ermittelten Winkelgeschwindigkeit beschrieben.

Die Erfindung ist anhand einer in der Zeichnung schematisch dargestellten, bevorzugten Vorrichtung zur Durchführung des Meßverfahrens für eine Tumble-Strömung in einem simulierten Verbrennungsraum eines Kolbenmotors beschrieben.

In einer zylindrischen Kammer 1 mit einer durch ein verstellbares Hubventil 2 steuerbaren Einströmöffnung 3 als drallerzeugendem Einlaß 4 wird eine Tumble-Strömung 5 induziert, wobei der Tumble 5 um eine zur Kammerachse 6 quergerichtete Drallachse 7 rotiert. An die Tumble-Kammer 1 ist quergerichtet angeschlossen eine Rohrstrecke 8 mit einer Meßeinrichtung 9.

Die Tumble-Kammer 1 weist einen Durchmesser "D" auf, der zwischen dem 2 bis 3,5fachen des Durchmessers "d" der Rohrstrecke 8 gewählt ist. Damit kann eine Rohr- bzw. Meßstrecke 8 vom Durchmesser "d" für mehrere durch Kammern 1 von unterschiedlichen Durchmessern "D" simulierten Verbrennungsräumen eines oder mehrerer Kolbenmotore Verwendung finden.

Auf den Kammer-Durchmesser "D" ist weiter die Höhe der Kammer 1 bezogen, deren Höhe "H" vorzugsweise etwa der Maßzahl des Durchmessers "D" angepaßt ist. Weiter ist aus der einzigen Zeichnung ersichtlich, daß die Rohr- bzw. Meßstrecke 8 auf halber Höhe "1/2 H" der Kammer 1 seitlich quergerichtet angeordnet ist. Das heißt, daß die Rohrstrecke 8 etwa koaxial zur Drallachse 7 des Tumbles 5 ausgerichtet vorgesehen ist, womit in vorteilhafter Weise eine nach dem Drallerhaltungssatz mit der Strömung mögliche Tumble-Abwanderung aus der Kammer 1 in die Rohrstrecke 8 ungestört, d.h. mit homogener Rotation erzielt ist.

Weiter ist aus der einzigen Figur ersichtlich, daß in der Rohr- bzw. Meßstrecke 8 koaxial ein stirnseitig verschlossenes Meßrohr 10 vorgesehen ist mit einer radial gerichteten Durchbrechung 11 in der Meßrohrwand als radial innerer Meßstelle 12, der in der Rohrwandung 13 der Rohrstrecke 8 eine radial gerichtete Durchbrechung 14 als radial äußere Meßstelle 15 zugeordnet ist. Weiter zeigt die einzige Figur, daß die innere Meßstelle 12 und die äußere Meßstelle 15 in einer von der Zylinderachse 6 der Tumble-Kammer 1 etwa um das Maß des Kammer-Durchmessers "D" beabstandeten Querebene 16 der Rohrstrecke 8 angeordnet sind.

Die vorbeschriebene Vorrichtung 17 dient für ein Drall-Meßverfahren für Rohrströmungen, wobei zur Ermittlung der Intensität eines Dralls bzw. eines Tumbles dessen Winkelgeschwindigkeit dient.

Mit der erfindungsgemäßen Vorrichtung 17 kann in einer Strömung die jeweilige Drall- bzw. Tumble-Winkelgeschwindigkeit aus einer fliehkraftbedingten Druckdifferenz Δ p aus in radial beabstandeten Meßstellen 12, 15 im Drall bzw. Tumble 5 gemessenen Radialkomponenten der Drücke Pᵣ₁ und Pᵣ₂ unter Einbeziehung von Dichte und Temperatur eines Strömungsmediums, z.B. Luft, in einem durch die Kammer 1 simulierten Verbrennungsraum eines Kolbenmotors ermittelt werden.

Eine auf die erfindungsgemäße Weise ermittelte Drall- bzw. Tumble-Winkelgeschwindigkeit ergibt aufgrund der ungestörten bzw. homogenen Rotation des Tumbles 5' in der Rohr- bzw. Meßstrecke 8 aufgrund fehlender, insbesondere rotierender Störwiderstände eine einwandfreie Aussage über die jeweilige Drallintensität.

Um diese Drallintensität mittels einer Maßzahl der Winkelgeschwindigkeit rasch in Erfahrung zu bringen, können die radial in der Querebene 16 der Rohr- bzw. Meßstrecke 8 beabstandeten Meßstellen 12 und 15 mit Drucksensoren 18, 19 in Verbindung stehen, deren Signale der fliehkraftbedingten Druckdifferenz Δ p in der Drall- bzw. Tumble-Strömung 5' unter Einbeziehung von Dichte- und Temperaturen-Werten -Meßfühler 20 - des Strömungsmediums in einem Rechenwerk 21 verknüpft werden.

Mit einer abgewandelten, nicht gezeigten Vorrichtung mit einer im Boden der Kammer zentrisch angeschlossenen Rohr- bzw. Meßstrecke kann auch eine um die Achse der zylindrischen Kammer rotierende Drall-Strömung auf ihre Intensität gemessen werden.

Die auf den physikalischen Eigenheiten des Dralls beruhende Erfindung mit den auf die Masse des Strömungsmediums im rotierenden Drall wirkenden und mit zunehmenden Drallradius anwachsenden Zentrifugalkräften ergibt sich eine Druckerhöhung an der Rohrinnenwand der Rohr- bzw. Meßstrecke 8 und somit eine statische Druckdifferenz zum Drall-Zentrum. Da diese Druckdifferenz auch eine Funktion der Winkelgeschwindigkeit jedes Dralls ist, kann somit dessen Winkelgeschwindigkeit in vorteilhafter Weise ohne rotierende Meßeinrichtungen ermittelt werden. Die hierfür beispielsweise gezeigte Vorrichtung 17 ist in einem einfachen, robusten Aufbau mit z.B. herkömmlichen Drucksensoren kostengünstig zu gestalten, wobei rückkopplungsfreie Messungen ohne Verfälschung der Strömung erzielt werden.

## Patentansprüche

1. Drall-Meßverfahren für Rohrströmungen, insbesondere für einen simulierten Verbrennungsraum eines Kolbenmotors,
- wobei zur Ermittlung der Intensität eines in einer als simulierter Verbrennungsraum dienenden zylindrischen Kammer (1) mittels eines drallerzeugenden Einlasses (4) erzeugten Dralls einer seiner durch eine Meßeinrichtung (9) erfaßbaren Parameter dient,
**dadurch gekennzeichnet,**
- **daß** ein in der Kammer (1) koaxial zur Kammerachse (6) oder um eine dazu quergerichtete Achse (7) induzierter Drall (5) einer an die Kammer (1) entsprechend der jeweiligen Drallachse (6 bzw. 7) angeschlossenen Rohr- bzw. Meßstrecke (8) mit zugeordneter Meßeinrichtung (9) mittels der Rohrströmung zugeführt wird, wobei
- in der gegenüber dem Durchmesser (D) der Kammer (1) einen etwa um das 2- bis 3,5fache kleineren Durchmesser (d) aufweisenden Rohr- bzw. Meßstrecke (8) eine jeweilige Drall-Winkelgeschwindigkeit (ω) aus einer fliehkraftbedingten Druckdifferenz (Δ p) aus in einer Rohrquerebene (16) radial beabstandet angeordneten Meßstellen (12, 15) im Drall (5') gemessenen Radialkomponenten der Drücke (Pᵣ₁; Pᵣ₂) unter Einbeziehung von Dichte und Temperatur ermittelt wird.

2. Drall-Meßverfahren nach Anspruch 1, **dadurch gekennzeichnet, daß** die Radialdrücke (Pᵣ₁; Pᵣ₂) im Drall-Zentrum und am durch eine Rohrwandung bestimmten Drall-Außenradius gemessen werden.

3. Vorrichtung zur Durchführung des Drall-Meßverfahrens nach einem der Ansprüche 1 oder 2, **dadurch gekennzeichnet,**
- **daß** in der Rohr- bzw. Meßstrecke (8) koaxial ein stirnseitig verschlossenes Meßrohr (10) vorgesehen ist mit einer radial gerichteten Durchbrechung (11) in der Meßrohrwand als radial innerer Meßstelle (12) im Drall-Zentrum, der
- in der Rohrwandung (13) der Rohr- bzw. Meßstrecke (8) eine radial gerichtete Durchbrechung (14) als radial äußere Meßstelle (15) im Drall-Außenradius zugeordnet ist.

4. Vorrichtung nach Anspruch 3, **dadurch gekennzeichnet,**
- **daß** die Rohr- bzw. Meßstrecke (8) an einer Kammer (1) mit einer Tumble-Strömung (5) im wesentlichen auf halber Kammerhöhe (1/2 mal H) quergerichtet angeschlossen ist, wobei
- die Höhe (H) der Kammer (1) maßlich ca. dem Durchmesser (D) der Kammer (1) gewählt ist.

5. Vorrichtung nach Anspruch 3 und 4, **dadurch gekennzeichnet, daß** die innere und die äußere Meßstelle (12, 15) im wesentlichen in einer von der Zylinderachse (6) der Tumble-Kammer (1) um etwa das Maß des Kammerdurchmessers (D) beabstandet vorgesehenen Querebene (16) der Rohr-bzw. Meßstrecke (8) angeordnet sind.

6. Vorrichtung nach einem oder mehreren der Ansprüche 3 bis 5, **dadurch gekennzeichnet,**
- **daß** die radial in einer Querebene (16) der Rohr- bzw. Meßstrecke (8) beabstandeten Meßstellen (12, 15) mit Drucksensoren (18, 19) in Verbindung stehen, deren
- Signale der fliehkraftbedingten Druckdifferenz (Δ p) in der jeweiligen Drall- oder Tumble-Strömung unter Einbeziehung von Dichte- und Temperatur-Werten des Strömungsmediums in einem Rechenwerk (21) der Ermittlung der Winkelgeschwindigkeit (ω) dienen.

## Claims

1. A method of measuring swirl in pipe flows, especially for a simulated combustion chamber of a piston engine,
- wherein a parameter detectable by a measuring device (9) is used to determine the intensity of a swirl generated by a swirl-generating inlet (4) in a cylindrical chamber (1) simulating a combustion chamber,
**characterised in that**
- a swirl (5) induced in the chamber (1) coaxially with the chamber axis (6) or around an axis (7) at right angles thereto is supplied by the flow in the pipe to a pipe section or measuring section (8) and associated measuring device (9) connected to the chamber (1) around the respective swirl axis (6 or 7), wherein
- in the pipe portion or measuring portion (8), which has a diameter (d) about- 2 or 3.5 times smaller than the diameter (D) of the chamber (1), an angular swirl velocity (ω) is calculated from a pressure difference (Δp) dependent on centrifugal force, between radial components of the pressures (Pᵣ₁; Pᵣ₂) measured in the swirl (5') at measuring places (12, 15) spaced radially apart in a transverse plane (16) of the pipe, allowing for density and temperature.

2. A swirl measuring process according to claim 1, **characterised in that** the radial pressures (Pᵣ₁; Pᵣ₂) are measured at the centre of the swirl and also at an outer radius of the swirl defined by a pipe wall.

3. A device for working the method of measuring swirl according to claim 1 or claim 2, **characterised in that**
- a measuring tube (10) closed at the end is disposed coaxially in the pipe section or measuring section (8) and has a radially inner measuring place (12) in the form of a radially directed aperture (11) in the measuring-tube wall in the centre of the swirl,
- which is associated with a radially outer measuring place (15) in the form of a radially directed aperture (14) in the wall (13) of the pipe portion or measuring portion (8) at the outer radius of the swirl.

4. A device according to claim 3, **characterised in that**
- the pipe section or measuring section (8) is transversely connected to a chamber (1) with a tumble flow (5) substantially half way up the chamber (1/2 x H), wherein
- the height (H) of the chamber (1) is made approximately equal to the diameter (D) of the chamber (1).

5. A device according to claim 3 or claim 4, **characterised in that** the inner and the outer measuring places (12, 15) are disposed in a transverse plane (16) of the pipe section or measuring section (8) substantially at a distance equal to the chamber diameter (D) from the cylinder axis (6) of the tumble chamber (1).

6. A device according to one or more of claims 3 to 5, **characterised in that**
- the measuring places (12, 15) spaced apart radially in a transverse plane (16) of the pipe section or measuring section (8) are connected to pressure sensors (18, 19),
- the signals from which, indicating the centrifugal pressure difference (Δ p) in the swirl or tumble flow, are used for calculating the angular velocity (ω) in a computer (21) allowing for the density and temperature of the flow medium.

## Revendications

1. Procédé de mesure du tourbillon d'un écoulement dans un conduit, notamment pour une chambre de combustion simulée d'un moteur à piston,
selon lequel, on détermine l'intensité d'un tourbillon généré à l'aide d'une entrée (4) générant un tourbillon dans une chambre cylindrique (1) simulant une chambre de combustion par l'un de ses paramètres que peut mesurer une installation de mesure (9),
**caractérisé en ce qu'**
- on applique un tourbillon (5) induit dans la chambre (1) coaxialement à l'axe (6) de cette chambre ou autour d'un axe (7) dirigé transversalement à cette chambre, dans un chemin de mesure ou conduit (8) raccordé à la chambre (1) suivant l'axe de rotation respectif (6, 7), et comportant une installation de mesure (9) pour recevoir l'écoulement dans le conduit,
- dans le chemin de mesure ou conduit (8) dont le diamètre (d) est égal au diamètre (D) de la chambre (1) divisé par 2 à 3, 5, on détermine en intégrant la densité et la température, une vitesse de rotation de tourbillon (ω) respective à partir d'une différence de pression (Δp) engendrée par la force centrifuge, à partir des composantes radiales des pressions (Pr₁, Pr₂) mesurées dans le tourbillon (5') en des points de mesure (12, 15) distants radialement dans un plan transversal (16) du conduit.

2. Procédé de mesure de tourbillon selon la revendication 1,
**caractérisé en ce qu'**
on mesure les pressions radiales (Pᵣ₁, Pᵣ₂) au centre du tourbillon et sur le rayon extérieur du tourbillon défini par la paroi du conduit.

3. Dispositif pour la mise en oeuvre de la mesure de tourbillon selon l'une des revendications 1 ou 2,
**caractérisé en ce que**
- le chemin de mesure ou conduit (8) comporte coaxialement un tube de mesure (10) dont l'extrémité avant est fermée, et dont une ouverture (11) est dirigée radialement dans la paroi du tube de mesure pour constituer le point de mesure radialement intérieur (12), au centre du tourbillon,
- et à ce point de mesure est associée comme point de mesure radialement extérieur (15) au niveau du rayon extérieur du tourbillon, une ouverture (14) dirigée radialement et réalisée dans la paroi (13) du chemin de mesure ou conduit (8).

4. Dispositif selon la revendication 3,
**caractérisé en ce que**
- le chemin de mesure ou conduit (8) est raccordé transversalement à la chambre (1) dans laquelle règne l'écoulement tourbillonnaire (5), et le raccord se fait essentiellement à mi-hauteur de la chambre (1/2 H), et
- la hauteur (H) de la chambre (1) correspond sensiblement au diamètre (D) de la chambre (1).

5. Dispositif selon la revendication 3 ou 4,
**caractérisé en ce que**
le point de mesure intérieur et le point de mesure extérieur (12, 15) sont prévus essentiellement dans un plan transversal (16) par rapport au chemin de mesure ou conduit (8), ces points de mesure étant distants d'une distance correspondant sensiblement au diamètre (D) de la chambre à tourbillon (1), suivant l'axe (6) du cylindre de cette chambre.

6. Dispositif selon une ou plusieurs des revendications 3 à 5,
**caractérisé en ce que**
- les points de mesure (12, 15) distants radialement dans un plan transversal (16) par rapport au chemin de mesure ou conduit (8) sont reliés à des capteurs de pression (18, 19), et
- les signaux des capteurs de pression donnant la différence de pression (Δp) dans l'écoulement tourbillonnaire servent à un calculateur (21) pour obtenir la vitesse angulaire (ω) en intégrant la densité et la température du fluide en écoulement.
